# EUROPEAN PATENT APPLICATION

(11) **EP 2 924 660 A1**
(43) Date of publication of application: **30.09.2015**
(21) Application number: 14198726.3
(22) Date of filing: 18.12.2014
(51) Int. Cl.: G07B 15/00, G06Q 20/00

(54) **AN ELETRONIC COMMERCE TRANSACTION SYSTEM USING ELECTRONIC TOLL COLLECTION TRANSPONDERS**

(30) Priority: 28.03.2014 CA 2847683
(71) Applicant: Kapsch TrafficCom AG, 1120 Wien (AT)
(72) Inventor: Manuel, Paul, Toronto Ontario M4A 2J1 (CA); Turnock, Richard, Toronto Ontario M2N 3S6 (CA)
(74) Representative: Weiser, Andreas

(57) **Abstract**

An electronic commerce system to perform a non-toll payment transaction with an electronic toll collection transponder, the transponder being located in a vehicle, the transponder having a transponder memory storing payment information. The electronic commerce system includes a point-of-sale (POS) terminal; and a handheld reader tethered to the POS terminal via a wired communication link. The handheld reader is movable to within close proximity of the transponder when the vehicle is adjacent to the POS terminal. When the handheld reader is in close proximity to the transponder, the handheld reader is to transmit a short-range RF signal that contains sales information, receive a signal that contains payment information from the transponder in response to transmitting the short-range RF signal, and send the signal containing the payment information to the POS terminal, via the wired communication link, for completing the non-toll payment transaction.

## Description

### TECHNICAL FIELD

The present disclosure relates to an electronic commerce system and, in particular, to a system for performing a non-toll transaction using an electronic toll collection transponder.

### BACKGROUND

Vehicle-based RFID communications are commonly used to communicate with electronic toll collection (ETC) systems. In such cases, ETC systems conduct toll transactions electronically using radio frequency (RF) communications between a vehicle-mounted transponder (a "tag") and a stationary toll lane or toll plaza transceiver (a "reader"). An example of an electronic toll collection system is described in U.S. Patent No. 6,661,352 issued Dec. 9, 2003 to Tiernay et al., and owned in common with the present application.

In some cases, an ETC transponder may be utilized to also perform non-toll electronic commerce transactions. For example, a transponder may be utilized in a vendor location in order to purchase goods and services offered by a vendor *(i.e.* perform a sales transaction). For example, gas stations and/or drive-through vendor locations may provide roadside readers for automatically communicating with a vehicle-mounted transponder in order to perform a sales transaction.

Unfortunately, vendor locations present a number of challenges for associated vendor systems. In particular, vendor locations, such as gas stations, do not generally regulate the flow of traffic, and vehicles are free to move about in any manner within them and may spend extended periods of time in the area. A reader operating in such a location has the problem of correctly locating a particular vehicle-mounted transponder and associating it with a particular transaction point, such as a gas station pump, in order to perform a location-dependent non-toll transaction. Signal strength and triangulation based methods are complex and suffer from multipath problems, particularly since large vehicles may be moving about the communication area. Accordingly, it would be advantageous to provide an improved vendor system for performing non-toll transactions with vehicle-mounted transponders.

### BRIEF DESCRIPTION OF THE DRAWINGS

Reference will now be made, by way of example, to the accompanying drawings which show an embodiment of the present application, and in which:
Figure 1 shows, in block diagram form, an example embodiment of an electronic commerce system;
Figure 2 shows, in block diagram form, an example transponder for use with the electronic commerce system of Figure 1; and
Figure 3 shows, in block diagram form, an example handheld reader of the electronic commerce system of Figure 1.

### DETAILED DESCRIPTION OF EXAMPLE EMBODIMENTS

The present application discloses systems and methods for conducting non-toll electronic commerce transactions using electronic toll transaction transponders.

In one aspect, the present application discloses an electronic commerce system to perform a non-toll payment transaction with an electronic toll collection transponder, the transponder being located in a vehicle, the transponder having a transponder memory storing payment information. The electronic commerce system includes a point-of-sale (POS) terminal; and a handheld reader tethered to the POS terminal via a wired communication link. The handheld reader is movable to within close proximity of the transponder when the vehicle is adjacent to the POS terminal. When handheld reader is in close proximity to the transponder, the handheld reader is to transmit a short-range RF signal that contains sales information, receive a signal that contains payment information from the transponder in response to transmitting the short-range RF signal, and send the signal containing the payment information to the POS terminal, via the wired communication link, for completing the non-toll payment transaction.

In another aspect, the present application discloses a method of conducting an electronic commerce transaction at a point-of-sale terminal (POS) using an electronic toll collection transponder, the transponder being located in a vehicle, the transponder having a transponder memory storing payment information. The method includes transmitting a short-range RF signal containing sales information to the transponder, wherein the short-range RF signal is generated by a handheld reader tethered to the POS terminal via a wired communication link and held in close proximity to the transponder; receiving a signal from the transponder that contains the payment information in response to the short-range RF signal; and sending the signal containing the payment information to the POS terminal, via the wired communication link, for completing the electronic commerce transaction.

Other aspects and features of the present application will be apparent to those of ordinary skill in the art from a review of the following detailed description when considered in conjunction with the drawings.

The present disclosure relates to an electronic commerce system that is used in conjunction with a vehicle-mounted transponder to perform non-toll transactions (such as, a sales transaction). In such cases, the electronic commerce system may include a point-of-sale (POS) terminal and a handheld reader. The handheld reader and the transponder may communicate with one another to relay associated transaction information (such as, sales and payment information, transponder ID, session ID, location ID, application ID, or other such data). The POS terminal processes the transaction information to complete the non-toll transaction.

The embodiments described below focus upon electronic commerce systems implemented in a gas station. However, it will be appreciated that the present application is not limited to gas stations and may be implemented in connection with other types of vendor locations such as drive-through locations, parking meters, etc.

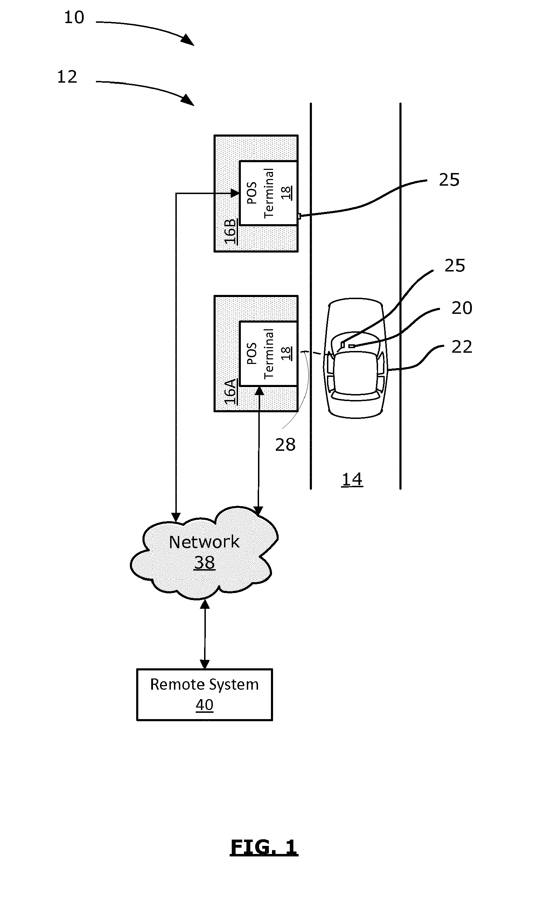

Reference is first made to Figure 1, which shows an example embodiment of an electronic commerce system, illustrated by reference number 10. In the illustrated example embodiment, the electronic commerce system 10 is implemented as part of a vendor location that is a gas station 12. The gas station 12 includes a lane 14 that is serviced by a first gas station dispenser 16A and a second gas station dispenser 16B. A vehicle 22 may enter the lane 14 and park adjacent to a gas station dispenser (as illustrated, next to the first gas station dispenser 16A). The gas station dispenser may then be operated in order to fuel the vehicle 22.

Each of the gas station dispensers 16A, 16B typically includes a mechanical section and an electronic section. The mechanical section includes the components for pumping and controlling fuel flow from the gas station dispenser to the vehicle 22 (such components may include motors, pumping units, meters, valves, hoses, nozzles, etc.). The electronic section controls the operation of the dispenser and communicates with an indoor sales system. The indoor sales system is an in-store system operated by an employee of the gas station 12 to conduct fueling transactions for associated gas station dispensers 16A, 16B. In such cases, a driver may enter a gas station store (where the indoor sales system is located) and make a payment for a requested amount of fuel from a particular gas station dispenser. The employee may then input an instruction into the indoor sales system to dispense the purchased amount of fuel from the particular gas station dispenser.

In at least some example embodiments, each of the gas station dispensers 16A, 16B may also include a point-of-sale (POS) terminal 18. The POS terminals 18 may be built into the gas station dispensers 16A, 16B. The POS terminals 18 allows for ordering and payment transactions for fuel to occur at the gas station dispensers 16A, 16B. As such, a driver may perform the fueling transaction directly at the gas station dispenser, and without having to enter the gas station store. The presence of built-in POS terminals 18 at the gas station dispensers 16A, 16B facilitates the fueling process for a driver. Nevertheless, POS terminals 18 have inherent drawbacks in that they require the use of requisite payment instruments (e.g. debit card, credit card, etc.) in order to perform the fueling transaction. As such, a driver is required to carry a payment instrument. Moreover, the payment transaction process at a POS terminal 18 by way of a payment instrument can be a tedious process (e.g. requiring the driver to manually input unique identification information, such as a PIN number, in order to process the transaction).

In at least some example embodiments, a transponder 20 normally used for electronic toll collection (ETC) transactions may be utilized as part of the electronic commerce system 10. As illustrated, the vehicle 22 may include the transponder 20. More particularly, the transponder 20 may be mounted inside of the vehicle 22. For example, the transponder 20 may be mounted on a vehicle windshield. In at least some example embodiments, the transponder 20 may be mounted elsewhere, such as on the license plate or elsewhere within the vehicle 22, so long as these positions permit the transponder 20 to perform radio frequency (RF) communications with other systems and devices within the electronic commerce system 10. In yet another example embodiment, the transponder 20 is incorporated into the vehicle 22 as an integrated component, rather than as an aftermarket accessory. For example, the transponder 20 may be a Dedicated Short Range Communication (DSRC) device used for Connected Vehicle applications.

As mentioned above, the transponder 20 may employ a predefined RF communication protocol for engaging in two-way RF communications with other systems and devices. For example, the transponder 20 may communicate with roadside readers (not shown) that form part of specific types of systems. In such cases, a roadside reader in conjunction with one or more antennas (not shown) may provide a coverage area for communicating with a transponder 20. When the transponder 20 enters the coverage area, communication may occur between the transponder 20 and the roadside reader via the one or more antennas. That is, the roadside reader and the one or more antennas function to activate the transponder 20 so communications may occur between them. In such example embodiments, information may be accessed, transferred and/or exchanged during communications between the transponder 20 and the roadside reader. For example, the transponder 20 may be instructed by the roadside reader to send information stored in its memory, and alternatively or additionally, store information received from the roadside reader.

The transponder 20 may be capable of engaging in both ETC communications and non-toll communications. During an ETC communication mode of the transponder 20, the transponder 20 may communicate with a roadside reader that is part of an electronic toll collection system to perform an ETC transaction. A non-toll communication mode of the transponder 20 may apply to various applications. Such applications may, for example, include vehicle emissions testing, vehicle inspection, driver and vehicle identification purposes, drive-through ordering, etc. In such example embodiments, the transponder 20 may communicate with a roadside reader of an associated system to provide and receive information of the requisite type for performing the non-toll application. Examples of the use of a transponder 20 for performing various types of non-toll applications are described in U.S. Patent Publication No. 20060255968 to Woo et al. and U.S. Patent Publication No. 20080218313 to d'Hont et al.

In at least some example embodiments, a roadside reader may be implemented as part of a system to perform a payment transaction with a vehicle-mounted transponder. For example, the roadside reader may be implemented in a gas station 12. In such example embodiments, the roadside reader may be connected to one or more antennas that provide a coverage area within the gas station 12 (the one or more antennas may be mounted on a canopy or a gantry of the gas station 12). When a vehicle-mounted transponder 20 enters the coverage area, the transponder 20 may communicate with the roadside reader, via the one or more antennas, to perform a fueling transaction. For example, the roadside reader may transmit a polling or trigger signal within the coverage area. The transponder 20 may receive the polling or trigger signal, and transmit a response signal to the roadside reader. Such a response signal may include information for performing the fueling transaction (*e.g.* transponder identification information, ordering information, payment information, etc.) In at least some example embodiments, the driver may further input information into the transponder 20 (*e.g.* via an input interface associated with the transponder 20) for relaying the information to the roadside reader. Moreover, the polling signal may include instructing information to the transponder 20 *(e.g.* an instruction indicating which gas station dispenser to operate for fueling the vehicle 22). As such, the use of a transponder 20 with a roadside reader may automate the fueling transaction.

Nevertheless, such an implementation of a roadside reader providing a large coverage area for communicating with a transponder 20 within a gas station 12 has its drawbacks. In such cases, communications between the roadside reader and the transponder 20 may result in location errors. The presence of other vehicle-mounted transponders moving in an arbitrary manner within the gas station 12 makes determining location of a particular transponder very difficult.

As illustrated, in at least some example embodiments, a handheld reader may be implemented as part of the electronic commerce system 10, via which a fueling transaction with a vehicle-mounted transponder 20 may occur. The handheld readers are indicated as reference number 25 and are in respective association with a POS terminal 18. More particularly, each of the handheld readers 25 include a communication link 28 with a respective POS terminal 18 in order for communications to be relayed between them for performing a fueling transaction with an external transponder 20. Greater details of such implementation of the handheld readers 25 within the electronic commerce system 10 are now described.

The handheld readers 25 are intended for use in close proximity to a transponder 20, as opposed to the above described roadside readers which provide communications over a large coverage area. Accordingly, the handheld readers 25 may be designed as being compact and portable. That is, the handheld readers 25 are of a small-size (*i.e.* compact) so that they may be used or operated while being held in a hand of a customer or a POS attendant. The handheld readers 25 are also movable (*i.e.* portable) so that they may be moved to within close proximity of a transponder 20 for communicating with the transponder 20. As such, a handheld reader 20 may be movable relative to a POS terminal 18 for use in communicating with a vehicle-mounted transponder 20, while maintaining connection with the POS terminal 18.

The handheld reader 25 may include an actuator or other trigger to cause the handheld reader 25 to initiate communications, *i.e.* to transmit a polling or trigger signal (in the case of an active transponder) or a continuous wave signal (in the case of a passive transponder). In conventional ETC communications, roadside readers are cyclically polling/transmitting in order to constantly monitor for transponders traversing the toll lane or plaza; however, in this situation the handheld reader only initiates communications when it receives an input via the actuator or trigger to cause it to transmit a signal.

As mentioned above, the communication link 28 tethers the handheld reader 25 to the POS terminal 18. The communication link 28 is a direct and physical communication link 28. That is, a wired communication link 28 is formed between the handheld reader 25 and the POS terminal 18. In at least some example embodiments, the wired connection may not be readily detachable from the handheld reader 25 and the POS terminal 18. In such cases, a housing associated with each of the handheld reader 25 and the POS terminal 18 may need to be removed in order to access and detach the wired communication link 28 connecting these devices. As such, a driver may not be able to detach the wired communication link 28 without damaging or dismantling these devices. By maintaining a direct wired connection between the portable handheld reader 25 and the stationary POS terminal 18, the handheld reader 25 may not be easily misplaced, lost or stolen.

In at least some example embodiments, the wired communication link 28 is formed by a shielded cable (such as, for example, a coaxial cable, an RS-232 cable, *etc.*) for transferring RF communication signals between the handheld reader 25 and the POS terminal 18. In at least some example embodiments, the wiring connecting the handheld reader 25 to the POS terminal 18 may be flexible. That is, a flexible wire may connect the two devices together. In such cases, the flexible nature of the wiring may provide a greater range of movement for the handheld reader 25 relative to the POS terminal 18 than of a non-flexible wiring connection. The wired communication link 28 may include a separate or integrated cord to physically and securely tether the handheld reader 25 to the POS terminal 18 to prevent loss or theft of the reader 25.

In some example implementations, the handheld reader 25 may be disabled if the wired communication link 28 is severed or otherwise compromised. In some examples, the handheld reader 25 may determine, prior to operation, whether the wired communication link 28 is intact by, for example, determining that an enable signal from the POS terminal is present on the link. Other mechanisms, including handshake protocols may also be used to confirm that the wired communication link 28 to the POS terminal 18 is intact. In an example in which the wired communication link 28 includes a data link/cable and a separate physical cord to tether the handheld reader 25, the handheld reader 25 may further confirm that the physical cord is intact prior to operation. In one example, this determination may be based on an always-on signal that is discontinued on disconnection of the physical cord. The physical cord may be wire or other materials, depending on the implementation chosen.

In at least some example embodiments, the handheld reader 25 may be directly attached to the POS terminal 18 when not being utilized. For example, as shown in association the with second gas station dispenser 16B, the handheld reader 25 is attached to the POS terminal 18 when not in use. In such example embodiments, the attachment may be formed in various manners. For example, the attachment may be formed by a mechanical attachment, magnetic attachment or other type of attachment. The attachment may be of any configuration so long as the handheld reader 25 may be detached from (when in use) and attached to (when not in use) to the POS terminal 18 with ease. In such cases, a driver may detach the handheld reader 25 from the POS terminal 18 for use in communicating with the transponder 20 to perform a fueling transaction, and upon completion of the fueling transaction, re-attach the handheld reader 25 to the POS terminal 18. In at least some example embodiments, the handheld reader 25 may be required to be re-attached to the POS terminal 18 as a condition for completing the fueling transaction. In at least some example embodiments, the handheld reader 25 may form an attachment with another component instead of the POS terminal 18 when not in use. For example, the handheld reader 25 may be attached to the gas station dispenser when not in use.

Moreover, in at least some example embodiments, the handheld reader 25 may not form an attachment to the POS terminal 18 (or another component) when not being utilized (in such cases, however, the handheld reader 25 and the POS terminal 18 are still connected via the wired communication link 28). Instead, for example, the handheld reader 25 may be deposited in a holder associated with the POS terminal 18 (or the gas station dispenser) when not being used, and may be removed from the holder when being used. In another example, a retractable spring-tensioned wire may connect the handheld reader 25 to the POS terminal 18. In such cases, the retractable wiring may be extended from the POS terminal 18 (or another component) when in use, and retracted into the POS terminal 18 (or another component) when not in use. By forming a retractable wiring connection, the handheld reader 25 may be ensured appropriate return to its "resting" position *(i.e.* position of non-usage) after usage. The spring-tensioned retractable wire and the communication link 28 may be one and the same in some cases.

The wired communication link 28 may have a length permitting the handheld reader 25 to be movable to within close proximity of the transponder 20 for communicating with the transponder 20. For example, the handheld reader 25 may be extendable from the POS terminal 18 by the wired connection to a position in close proximity to the transponder 20 when the vehicle is adjacent to the POS terminal 18. As illustrated in FIG. 1, the handheld reader 25 may be extended from the first POS terminal 18, via the wired communication link 28, to within close proximity of the transponder 20.

The handheld reader 25 is designed to transmit a low-power, short-range RF signal using the same over-the-air communications protocol normally used by the transponder 20. As such, in order for the transponder 20 to detect the signal from the handheld reader 25, the handheld reader 25 is required to be placed in close proximity to the transponder 20. Close proximity may be defined, for example, as a range of distances within which handheld reader 25 may communicate with the transponder 20, while remaining compliant with FCC Part 15 for intentional radiators. The power of the handheld reader 25 may be configured to be low enough to restrict the range for communication to the immediate area of the handheld reader 25 so as to prevent accidental or intentional communications with transponders mounted to other vehicles. For example, the range should be short enough to prevent a user from surreptitiously or unintentionally communicating with a transponder mounted to a nearby vehicle. Accordingly, the communication distance (which may in some cases be defined as the 3 dB point) may be, for example, less than 5 centimeters between the handheld reader 25 and the transponder 20. In at least some example embodiments, the distance may be more or less than such a distance. For example, the distance may be less than 10 centimeters, or 20 centimeters, or some other suitable distance. The distance is an appropriate distance so as to ensure that communication occurs only between the handheld reader 25 and the transponder 20 that is in immediate proximity to the POS terminal 18. Accordingly, it will be appreciated that the distance may be of other lengths not specifically described herein.

In use, the driver moves the handheld reader 25 away from the POS terminal 18 by the extendable wired connection and holds the handheld reader 25 close to the transponder 20. When the handheld reader 25 is within close proximity to the transponder 20, the transponder 20 may communicate with the handheld reader 25. The handheld reader 25 may include an actuator to cause the handheld reader 25 to initiate communications.

In some embodiments, the handheld reader 25 and/or the transponder 20 may include audible and/or visual output devices to signal when a transaction has occurred or has failed. For example, the handheld reader 25 may be configured to output an audible signal or tone to indicate to the user that the non-toll transaction has successfully occurred. A different tone may be used to indicate a failed transaction. A screen or other visual output on the handheld reader 25 or the POS terminal 18 may provide information regarding the transaction, including whether it was successful or whether it failed. An audible tone may also alert others to the fact that a non-toll transaction has occurred using an ETC transponder, thereby preventing a user from surreptitiously communicating with another user's transponder (since the other users would be alerted to the fact that the handheld reader 25 is being held in close proximity to one of their transponders).

As mentioned above, the handheld reader 25 may communicate with the transponder 20 to perform a fueling transaction. The fueling transaction may include ordering and purchasing of fuel from a gas station dispenser. Moreover, the fueling transaction may occur prior to or after pumping of fuel into the vehicle 22. In the former case, the fueling transaction may involve both ordering and purchasing of fuel. While, in the latter case, the fueling transaction may only involve purchase of the fuel.

In such example embodiments, when a vehicle 22 is parked adjacent to a gas station dispenser, the handheld reader 25 (connected to the POS terminal 18) may be placed in close proximity to the vehicle-mounted transponder 20 to initiate the fueling transaction. The handheld reader 25 may transmit a short-range RF signal destined for the transponder 20. In such example embodiments, the signal may not be continuously or periodically transmitted from the handheld reader 25. The handheld reader 25 may include an actuator, for example a push button, for triggering (*e.g.* by the driver) the handheld reader 25 to transmit the signal. In at least some example embodiments, the signal may include sales information. In such cases, if fueling has not occurred, the sales information may indicate the different fuel types available and the unit cost of each of the fuel types. On the other hand, if fueling has already occurred, the sales information may indicate the payment amount of the fuel that has already been pumped.

The transponder 20 is configured to detect the signal transmitted by the handheld reader 25. In detecting the signal, the transponder 20 may receive sales information included in the signal. In such cases, the transponder 20 may appropriately respond to the detected signal.

For example, in cases where fueling has not occurred, the transponder 20 may send a response signal that includes ordering and payment information. Such ordering and payment information may be pre-stored in the transponder 20 (*e.g.* in the transponder memory). Upon receipt of the signal from the handheld reader 25, the transponder 20 may retrieve the ordering and payment information, and send this information to the handheld reader 25. The ordering information may indicate type and amount of fuel requested. The payment information may indicate payment instrument information (such as, debit card or credit card information) for purchasing the fuel. Such information may be inputted into the transponder 20 for storage during configuration of the transponder 20.

In at least some example embodiments, the transponder 20 may be associated with an input mechanism. The input mechanism may include one or more input interfaces that are used to configure, control and input information into the transponder 20. The input interfaces may be part of the transponder 20 and/or may be external to the transponder 20. Such input interfaces may, for example, be used to input the ordering and payment information. As mentioned above, in at least some example embodiments, some or all of the information may be inputted during configuration of the transponder 20 (*i.e.* prior to communicating with the handheld reader 25).

In at least some example embodiments, some or all of the information may be inputted during communication with the handheld reader 25. In such cases, for example, the transponder 20 may receive the sales information. The sales information may be outputted (e.g. displayed) in an output interface (*e.g.* a display) associated with the transponder 20. The driver may then input commands (via the input interface) for ordering the fuel based on the available fueling options as indicated by the outputted sales information. The inputted ordering information is then transmitted to the handheld reader 25 along with the payment information (which may have been inputted and stored prior to communication with the handheld reader 25).

Contrastingly, in cases where fueling has already occurred, the transponder 20 may only send its unique ID code or payment information. For example, payment instrument information may be pre-stored in the transponder 20 *(e.g.* in the transponder memory). In such cases, upon detection of the signal from the handheld reader 25, the transponder 20 retrieves and sends the payment information for payment of the fuel to the handheld reader 25.

The handheld reader 25 receives the signal transmitted by the transponder 20 that includes the ordering and/or payment information. The handheld reader 25 then sends this received information to the POS terminal 18, via the wired communication link 28, for processing the information. More specifically, the POS terminal 18 processes the information for completing the fueling transaction. For example, if the information includes ordering and payment information, the POS terminal 18 may initially process the payment information. In such cases, the POS terminal 18 may be connected to a back-end server which receives the payment information. The back-end server may then communicate with a financial institution to obtain payment for the purchase of the fuel based on the received payment information. Upon completion of the payment process, the POS terminal 18 may configure the gas station dispenser to dispense the ordered fuel. Alternatively, if the information only includes payment information, the POS terminal 18 only performs the above-described payment processing operation, as fuel has already been order and dispensed.

It will be appreciated that in at least some example embodiments, other information (such as a unique transponder identification number identifying a transponder 20 involved in the fueling transaction) may be transferred between the handheld reader 25 and the transponder 20 during the fueling transaction. Details of such example embodiments are provided below.

In at least some example embodiments, the electronic commerce system 10 may be implemented as a stand-alone system specific to a vendor location (*e.g.* the gas station 12). However, in at least some example embodiments, as illustrated, the electronic commerce system 10 may further include a centralized system, such as a remote system 40 (which may be implemented as a server) that serves a plurality of electronic commerce systems implemented at various vendor locations.

The remote system 40 may communicate with the POS terminals 18 over a network 38. The network 38 may include a private and/or a public network (such as the Internet).

The remote system 40 may receive, process and store information associated with a transponder 20. For example, the remote system 40 may create and store an account for a transponder 20. The account may include various types of informations such as a unique transponder identification number, user information associated with the transponder, payment information, user preferences associated with a vendor location (*e.g.* a preset order for fuel at a gas station 12), etc. In such example embodiments, the remote system 40 may receive a communication, from a POS terminal 18, for processing a fueling transaction between a transponder 20 and handheld reader 25. In such cases, the remote system 40 may receive a transponder unique identification number which identifies the transponder 20 involved in the communication. The remote system 40 may then process the fueling transaction based on retrieving and reading the stored account information associated with the received transponder identification number (*e.g.* payment information may be retrieved and read for processing payment for a fuel purchase).

In the above described example embodiments, the transponder 20 may not have to send payment information during the fueling transaction, and sending of the unique transponder identification number may be sufficient to complete the fueling transaction. Such an implementation provides for a more secure exchange of information. Moreover, the transponder 20 may not even have to store such sensitive information as payment information, because the fueling transaction may be processed without the transfer of the sensitive information.

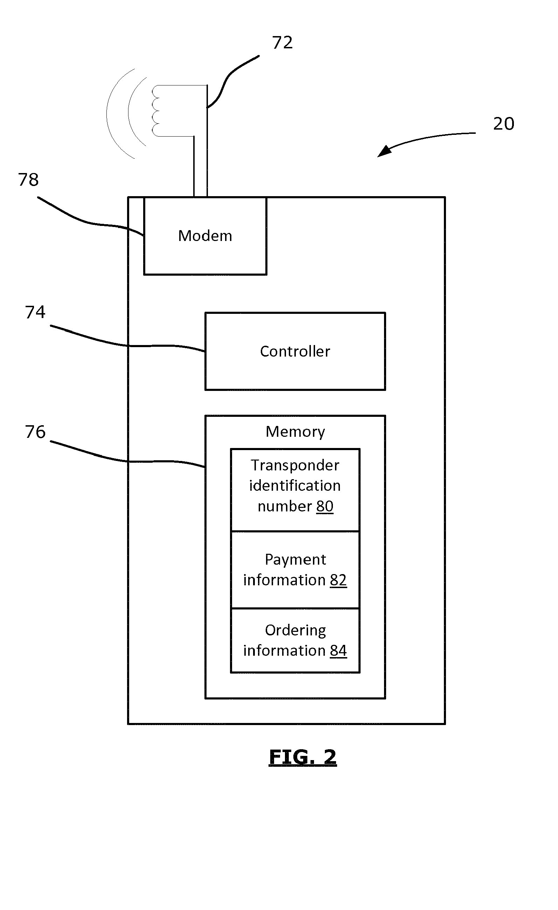

Reference is next made to FIG. 2 which illustrates an example transponder 20 (in block diagram form) that may be used with the electronic commerce system 10 (FIG. 1) to perform a non-toll transaction (*e.g.* a fueling transaction). As shown in FIG. 2, the transponder 20 has a modem 78 that is configured to de-modulate RF signals received by a transponder antenna 72 into a form suitable for use by a transponder controller 74. The modem 78 is also configured to modulate signals from the transponder controller 74 for transmission as an RF signal over the transponder antenna 72.

The transponder 20 also includes a transponder memory 76 that is connected to the transponder controller 74. The transponder controller 74 may access the transponder memory 76 to store and retrieve data. The transponder memory 76 may be random access memory (RAM) or flash memory. In one example embodiment, the transponder memory 76 is the integrated memory of a microcontroller.

The transponder memory 76 may be used to store different types of information. More specifically, the transponder memory 76 may store information that is relevant in performing a non-toll transaction (such as, a fueling transaction). For example, in at least some example embodiment, the transponder memory 76 may store a unique transponder identification number 80. The unique transponder identification number 80 may be transmitted during a communication session with a handheld reader 25 as part of a non-toll transaction. The handheld reader 25 and/or other devices and systems (such as, the remote system 40) may use the transponder identification number 80 to identify the transponder 20 involved in the communication.

In at least some example embodiments, the transponder memory 76 may store non-toll application specific information. Such information may include payment information 82. The payment information 82 may include payment instrument information (such as, debit card or credit card information) for a user *(e.g.* a driver) of the transponder 20. Such payment information 82 may be transmitted by the transponder 20 during the non-toll transaction for purchase of goods and services (e.g. purchase of fuel). Moreover, in at least some example embodiments, the transponder memory 76 may store ordering information 84. Ordering information 84 may indicate a preset order for goods and services from a vendor location as part of a non-toll transaction (*e.g.* a preset fuel amount and type for a fueling transaction). Such ordering information 84 may similarly be transmitted by the transponder 20 during the non-toll transaction for ordering of goods and services.

The transponder memory 76 stored additional data, such as a transponder ID. It may also store a session ID and codes, keys and/or algorithms to support transaction security, such as encryption and authentication.

It will be appreciated that the example types of information described to be stored in the transponder memory 76 is not exhaustive, and that other types of information may also be stored in the transponder memory 76.

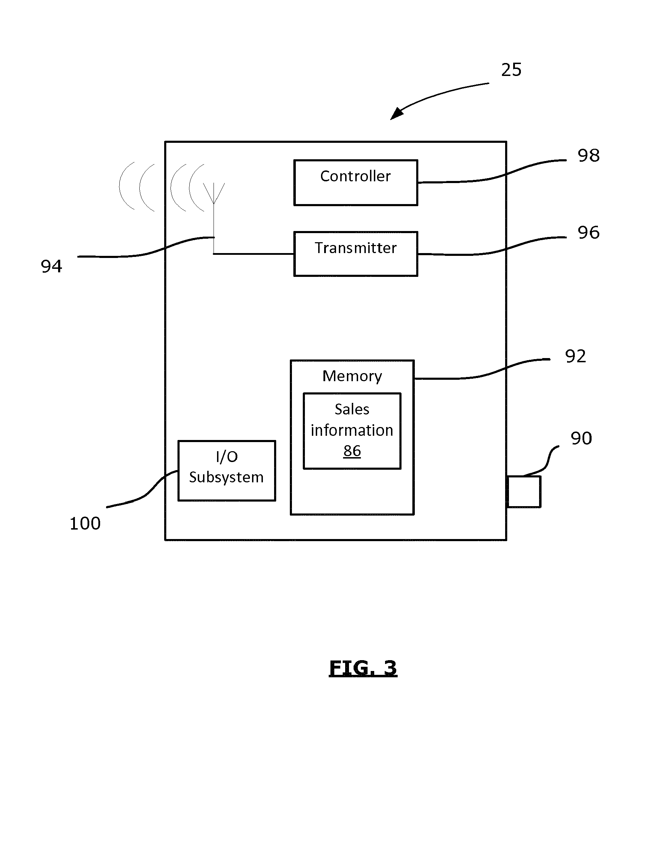

Referring now to FIG. 3, which shows in block diagram form an example handheld reader 25 of the electronic commerce system 10 of FIG. 1. The handheld reader 25 includes memory 92, a RF antenna 94, a transmitter 96, a controller 98 and an I/O subsystem 100. The memory 92 may store information relevant to perform a non-toll transaction with a transponder 20. For example, the stored information may include sales information 86 indicating price of goods and services offered at a vendor location (*e.g.* unit cost of each type of available fuel at a gas station 12). As described above, such sales information may be sent by the handheld reader 25 to the transponder 20 and accordingly processed by the transponder 20 during a non-toll transaction. In at least some example embodiments, the memory 92 may store other types of information.

As mentioned above, the handheld reader 25 is designed to transmit a low-power, short-range RF signal, over the RF antenna 94, using the same over-the-air protocol normally used by the transponder 20. The signal may typically have a range of a few centimeters (such as, 5, 10 or 20 centimeters) within which communication may occur between the handheld reader 25 and the transponder 20. Such a short communication range ensures that the handheld reader 25 may be effected to communicate with the particular transponder 20, and not inadvertently or intentionally with other transponders, to perform the non-toll transaction, when the handheld reader 25 and the particular transponder 20 are in close proximity to one another. The signal may not be continuously or periodically transmitted from the handheld reader 25. Instead, the handheld reader 25 may include an actuator 90, for example a push button, for triggering the handheld reader 25 to transmit the signal containing the information stored in memory 92 over the RF antenna 94.

In such example embodiments, during initiation of a non-toll transaction (such as, a fueling transaction), the handheld reader 25 is held in close proximity to the transponder 20 so that the short-range RF signal transmitted by the handheld reader 25, via the RF antenna 94, may be detected by the transponder 20. In such cases, sales information may be transmitted as part of the short-range RF signal for receipt by the transponder 20.

The transponder 20 is configured to detect the transmitted short-range RF signal using the transponder antenna 72. In at least some example embodiments, if the short-range RF signal includes sales information, the transponder 20 may accordingly output the sales information (*e.g.* via an output interface associated with the transponder 20). The output of such sales information may inform a user of the transponder 20 of price and product information of goods and services being offered at the vendor location.

In response to receiving the short-range RF signal, the transponder 20 may be configured to cause the transponder antenna 72 to transmit at least some of the information stored in the transponder memory 76. As mentioned above, such information to be transmitted may include one or more of unique transponder identification number 80, payment information 82, ordering information 84 or other types of information. In such cases, the transponder controller 74 may read the contents from the transponder memory 76 and transmit at least some of the contents from the transponder memory 76 using the transponder antenna 72.

The transmitted signal containing information from the transponder 20 is received by the handheld reader 25, via the RF antenna 94. Such information is then appropriately processed by the handheld reader 25. As mentioned above, the handheld reader 25 may be connected to another system, such as a POS terminal 18, via a wired communication link 28. For example, the I/O subsystem 100 of the handheld reader 25 may form the connection with the wired communication link 28. In such cases, the received information may be sent by the handheld reader 25 to the POS terminal 18 via the wired communication link 28. The received information is subsequently processed by the POS terminal 18 to complete the non-toll transaction (e.g. the information is used to perform a payment transaction).

Additionally, in at least some example embodiments, the handheld reader 25 may be further configured to verify that the transponder 20 is compatible for performing the non-toll transaction. For example, the actuator 90 on the handheld reader 25, such as a depressed button, may send a test signal to the transponder 20 to test the compatibility of the transponder 20. In response to receiving the test signal, the transponder 20 may perform various checks of its internal components. The transponder 20 may then indicate the results of these checks to the driver using visual and/or audio indication means located on the transponder 20. Alternatively, the results of these checks may be indicated visually and/or audibly on the handheld reader 25 based on a received reply signal from the transponder 20. Such results may indicate whether the transponder 20 is compatible to perform the non-toll transaction with the handheld reader 25.

Although the above example embodiments typically relate to POS terminals associated with gas station dispensers, the electronic commerce system and method may be implemented in other commercial contexts. In some example implementations, the POS terminal is associated with a drive-through ordering station of a vendor location, a parking meter, an emission inspection system, a non-petrol dispenser in a refueling station, an electrical re-charging station, or a battery dispenser for an electric vehicle.

In one example embodiment, the POS terminal is associated with a hydrogen refueling dispenser. In such an embodiment, the transponder may be configured to transmit real-time refueling conditions to the POS terminal while refueling, including one of flow rate, temperature, and pressure.

Certain adaptations and modifications of the invention will be obvious to those skilled in the art when considered in light of this description. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. An electronic commerce system to perform a non-toll payment transaction with an electronic toll collection transponder, the transponder being located in a vehicle, the transponder having a transponder memory storing payment information, the electronic commerce system comprising:
a point-of-sale (POS) terminal; and
a handheld reader tethered to the POS terminal via a wired communication link;
wherein the handheld reader is movable to within close proximity of the transponder when the vehicle is adjacent to the POS terminal; and
wherein when the handheld reader is in close proximity to the transponder, the handheld reader is to transmit a short-range RF signal that contains sales information, receive a signal that contains payment information from the transponder in response to transmitting the short-range RF signal, and send the signal containing the payment information to the POS terminal, via the wired communication link, for completing the non-toll payment transaction.

2. The system of claim 1, wherein the wired communication link connecting the handheld reader to the POS terminal comprises a data cable.

3. The system of claim 2, wherein the data cable includes a physical cord tethering the handheld reader to the POS terminal.

4. The system of any one of claims 1 to 3, wherein the short-range RF signal comprises a signal at a power level that restricts the communication range to within 5 centimeters.

5. The system of any one of claims 1 to 3, wherein the short-range RF signal comprises a signal at a power level that restricts the communication range to within 10 centimeters.

6. The system of any one of claims 1 to 3, wherein the short-range RF signal comprises a signal at a power level that restricts the communication range to within 20 centimeters.

7. The system of any one of claims 1 to 6, wherein the handheld reader includes an actuator and the handheld reader is configured to transmit the short-range RF signal in response to detecting an activation of the actuator.

8. The system of any one of claims 1 to 7, wherein the payment information comprises a transponder ID.

9. The system of any one of claims 1 to 7, wherein the POS terminal is associated with one of a gas station dispenser in a gas station, a drive-through ordering station of a vendor location, a parking meter, an emission inspection system, a non-petrol dispenser in a refueling station, an electrical re-charging station, a battery dispenser for an electric vehicle.

10. The system of any one of claims 1 to 7, wherein the POS terminal is associated with a hydrogen refueling station, and wherein the transponder is configured to transmit real-time refueling conditions to the POS terminal while refueling, including one of flow rate, temperature, and pressure.

11. The system of any one of claims 1 to 10, wherein the handheld reader is to determine that the wired communication link is intact prior to transmitting the short-range RF signal.

12. A method of conducting an electronic commerce transaction at a point-of-sale terminal (POS) using an electronic toll collection transponder, the transponder being located in a vehicle, the transponder having a transponder memory storing payment information, the method comprising:
transmitting a short-range RF signal containing sales information to the transponder, wherein the short-range RF signal is generated by a handheld reader tethered to the POS terminal via a wired communication link and held in close proximity to the transponder;
receiving a signal from the transponder that contains the payment information in response to the short-range RF signal; and
sending the signal containing the payment information to the POS terminal, via the wired communication link, for completing the electronic commerce transaction.

13. The method claimed in claim 12, further comprising detecting an input from an actuator on the handheld reader and transmitting the short-range RF signal in response to the input.

14. The method claimed in claim 12 or claim 13, wherein the short-range RF signal comprises a signal at a power level that restricts the communication range to within 20 centimeters.

15. The method claimed in claim 12, further comprising, prior to transmitting:
determining that the wired communication link is severed;
disabling communications for the handheld reader until a restoration action is received; and
restoring communications for the handheld reader after the restoration action is received.
